Europäisches Patentamt

European Patent Office

Office européen des brevets

(19)

(11) Veröffentlichungsnummer: **0 099 551**

A2

# (12) EUROPÄISCHE PATENTANMELDUNG

(21) Anmeldenummer: 83106919.0

(22) Anmeldetag: 14.07.83

(51) Int. Cl.³: **A 47 J 37/06**

(30) Priorität: 17.07.82 DE 3226909

(43) Veröffentlichungstag der Anmeldung:
01.02.84 Patentblatt 84/5

(84) Benannte Vertragsstaaten:
AT BE CH DE FR GB IT LI NL SE

(71) Anmelder: Henke, Wilhelm
Schanze Weg 4-10
D-4990 Alswede 4(DE)

(72) Erfinder: Wonderschütz, Manfred
Ostertorstrasse 4
D-4990 Lübbecke 1(DE)

(74) Vertreter: Hoefer, Theodor, Dipl.-Ing.
Kreuzstrasse 32
D-4800 Bielefeld 1(DE)

(54) Grillgerät.

(57) Bei einem Grillgerät mit Roststäben zum Abstützen des zu grillenden Gutes ist das Rost von Fettrinnen (16, 18, 22) gebildet, die derart gegeneinander versetzt angeordnet sind, daß die Fettrinnen (16, 18, 22) auf Lücke gegeneinander angeordnet sind, wobei die Breite der Fettrinnen (16, 18, 22) voneinander breiter ist als der lichte Abstand der die Roststäbe bildenden Fettrinnen (Fettrinnenkanten) voneinander. Die Fettrinnen (16, 18 22) sind geneigt auf einem Tragrahmen (11, 21) angeordnet; das abtropfende Fett wird von den Fettrinnen (16, 18, 22) in einer Quersammelrinne (20, 24) aufgefangen.

Fig. 1

EP 0 099 551 A2

**0099551**

**Patentanwalt**

# Dipl.-Ing. Th. Hoefer

4800 Bielefeld 1, den
Kreuzstraße 32
Telefon (05 21) 17 10 72 - Telex 9-32 449
Bankkonten: Commerzbank AG, Bielefeld 6 851 471 (BLZ 480 400 35)
Sparkasse Bielefeld 72 001 563 (BLZ 480 501 61)
Postscheckkonto: Amt Hannover 689 28-304

Zugelassener Vertreter beim Europäischen Patentamt
Prof. Representative before the European Patent Office
Mandataire agréé près l'Office européen des brevets

Diess.Akt.Z.: E 29

Herr Wilhelm Henke, Schanze Weg 4-10, 4990 Alswede 4

## Grillgerät

Die Erfindung bezieht sich auf ein Grillgerät mit das zu grillende Gut stützenden, parallel angeordneten, etwa waagerechten Roststäben, die über einer Glutfläche liegen.

Bei den bekannten Grillgeräten besteht der Nachteil, daß das von dem Grillgut abtropfende tierische Fett in der z.B. durch Holzkohle erzeugten Glut verbrennt und dabei gesundheitsschädliche chemische Verbindungen frei werden, die sich an das Grillgut gesundheitsgefährdend anlagern. Weiterhin besteht der Nachteil, daß die ungleichmäßigen und ständig wechselnden Glutflächen des zu grillenden Gutes leicht an den der Glut näher liegenden Flächen ankohlen und das Gut damit zusätzlich eine gesundheitsschädliche Oberfläche aufweist. Auch wird das Aussehen der gegrillten Fleischstücke, der Bratwurst o.dgl. beeinträchtigt.

Aufgabe der Erfindung ist es, ein Grillgerät der genannten Art derart auszubilden, daß beim Erhitzen frei werdendes Grillgut nicht in die heiße Glut abtropft, sondern aufgefangen wird.

Weiterhin soll der Grillrost derart ausgebildet sein, daß eine möglichst gleichmäßige Wärmestrahlung aus der Glut auf die Unterseite des zu grillenden Gutes auftrifft.

Außerdem soll der von der Glut aufsteigende Rauch in Teilströmen aufgeteilt und zumindest teilweise schräg an den Roststäben vorbeistreichen.

Gemäß der Erfindung wird die Aufgabenstellung bei einem Grillgerät der vorgenannten Gattung dadurch gelöst, daß in wagerechter Ebene sich überlappende, gegeneinander versetzt angeordnete Fettrinnen als Roststäbe angeordnet sind, die breiter sind als der lichte Abstand der Fettrinnen bzw. der die Roststäbe bildenden Fettrinnenkanten voneinander.

Bei einem bevorzugten Ausführungsbeispiel sind in der Höhe gegeneinander versetzte Fettrinnen als Roststäbe oberhalb der Glut angeordnet, wobei die tiefer liegenden Fettrinnen, die auf Lücke gegenüber den oberen Fettrinnen liegen, breiter sind als der lichte Abstand der oberen Fettrinnen voneinander.

Durch eine solche Ausbildung wird zwischen dem zu grillenden Gut und der Glut selbst eine nach unten insoweit geschlossene Fläche gebildet, so daß das abtropfende Fett nicht in die Glut fallen kann, sondern unmittelbar nur in die Fettrinnen gelangt.

Bei einer weiteren bevorzugten Ausbildung sind diese Fettrinnen gegenüber der waagerechten Ebene geneigt über der Glutfläche angeordnet; unterhalb ihrer tieferen Rinnenöffnung ist eine quer verlaufende Fettsammelrinne gelagert, so daß das flüssige Fett in dieser Sammelrinne außerhalb der Glutfläche sich ablagert und damit die Glut selbst nicht mit Fett beaufschlagt werden kann.

Durch das Versetzen der Fettrinnen entweder in der waagerechte Ebene oder in der Höhe einerseits und unterhalb der Zwischenräume zwischen deren benachbarten andererseits wird eine durchgehende Auffangfläche für abtropfendes Fett geschaffen, die ein Auftropfen auf die Glut verhindert und weiterhin die von der Glut ausgehende Strahlung derart abfängt, daß Überhitzungen des Grillgutes vermieden werden.

Weitere Merkmale der Erfindung ergeben sich aus den Unteransprüchen.

Der aus der Glutfläche aufsteigende Rauch wird in Ströme unterteilt, die unter Schrägführung an den Fettrinnen entlangstreichen und einerseits damit breitflächig die
Fettrinnen erhitzen, die dann mittelbar Wärmestrahlung
an das darüber lagernde Grillgut abgeben und andererseits
dieses Grillgut unmittelbar grillen.

Auf der Zeichnung ist ein Ausführungsbeispiel der Erfindung dargestellt. Es zeigen:

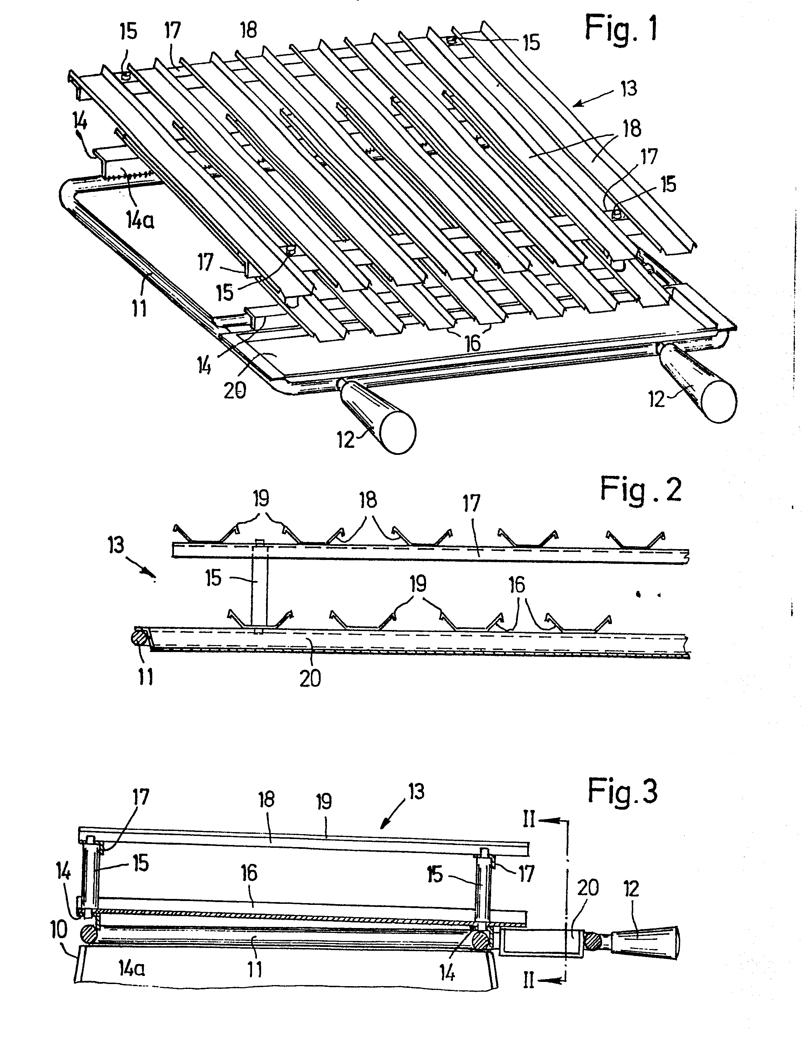

Fig.1    eine perspektivische Ansicht eines Grillrostes mit Rahmen;

Fig.2    eine Vorderansicht desselben Grillrostes mit teilweisem Schnitt entsprechend der Schnittlinie II-II in Fig.3;

Fig.3    eine Seitenansicht desselben Grillrostes, teilweise geschnitten;

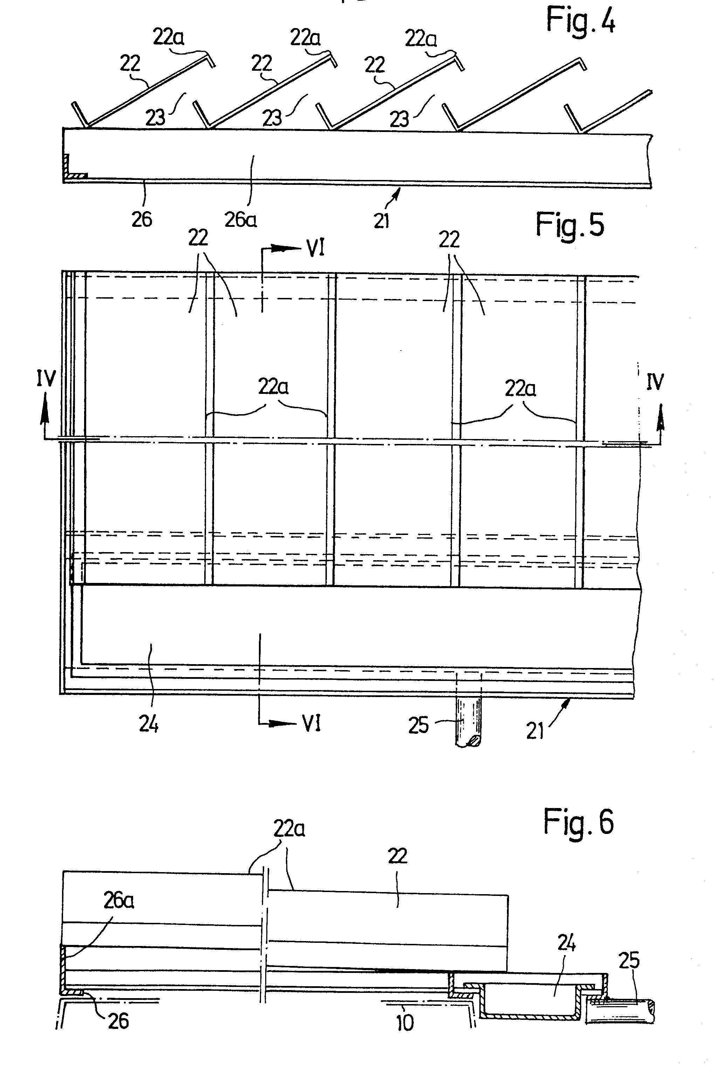

Fig.4    eine schematische Seitenansicht eines abgeänderten Grillgerätes mit schrägfächerartig parallel angeordneten Fettrinnen, entsprechend der Schnittlinie IV-IV in Fig.5;

Fig.5    eine Draufsicht auf dieselben Fettrinnen mit Quersammelrinne und

Fig.6    eine Seitenansicht derselben Fettrinnen mit Rahmen und Sammelrinne entsprechend der Schnittlinie VI-VI in Fig.5.

Auf einem üblichen Traggestell 10 ruht ein viereckiger Rahmen 11, an dem einseitig oder mehrseitig Handgriffe 12 befestigt sind, die ein Abnehmen oder Aufsetzen des lose aufgelegten Rahmens 11 mit Grillrost 13 gestatten (erleichtern). An diesem Rahmen 11 sind Querleisten 14 befestigt, an denen Abstandshalter 15 senkrecht nach oben vorstehen. Der Rahmen 11 und die Querleisten 14 mit in den Eckbereichen angeordneten Abstandshaltern 15 sind beispielsweise durch Schweißen zu einer festen Einheit verbunden. Dabei ist beispielsweise die winkelförmige Querleiste 14, welche den Handgriffen 12 am weitestens entfernt ist, mit ihrem senkrechten Schenkel 14a nahezu auf dem Tragrahmen 11 befestigt. Der Tragrahmen 11 der anderen winkelförmigen Querleiste 14 liegt dabei im Eckbereich auf, so daß die an den Querleisten 14 zu befestigenden Fettrinnen 16, welche ebenfalls mit dem Tragrahmen 11 eine Einheit bilden, in Richtung der Handgriffe 12 geneigt angeordnet sind. Auf den Abstandshaltern 15 sind ebenfalls eine vordere und hintere Winkelleiste 17 lösbar aufgesteckt oder mittels Schrauben und Muttern befestigt, auf denen ebenfalls etwa U-förmige Fettrinnen 18 parallel nebeneinander in gewissen Abständen befestigt und gegenüber den unteren Fettrinnen 16 versetzt angeordnet sind. Diese nach oben offenen Fettrinnen 16, 18 zeigen in ihrer Längsrichtung obere Auflagekanten 19, die im Querschnitt umgekehrt V-förmig ausgebildet sind und eine strichförmige Auflage für die zu grillenden Fleischstücke, Bratwurst, Fisch o.dgl. bilden.

Die Fettrinnen 16, 18 können zur Lösung der gestellten Aufgabe verschiedene geeignete Querschnitte aufweisen, besonders bevorzugt ist das in den Figuren gezeigte U-Profil mit den vorbeschriebenen oberen Auflagekanten 19. Der Mittelsteg eines solchen Profiles bietet eine gute Auflagefläche auf den Winkelleisten 14, 17, die derart angeordnet sind, daß die Fettrinnen 16, 18 nach einer Seite des Rahmens, vorzugsweise zu den Handgriffen 12, geneigt verlaufen. Ihre auslaufenden Rinnenöffnungen liegen oberhalb der Quersammelrinne 20, die das ablaufende Fett außerhalb der Glutfläche sammelt und im Tragrahmen 11 gehalten
ist.

Durch die lösbare Anordnung der oberen Fettrinnen 18 von
den senkrechten Abstandshaltern 15 können die Fettrinnen
16, 18 in einfacher Weise nach dem Gebrauch ge-reinigt
werden.

Das Material (Werkstoff) der Fettrinnen 16, 18 ist zweckmäßig so gewählt, daß das Fett leicht abläuft und nicht
darin klebt. Hier ist z.B. nichtrostender Stahl zweckmäßig. Soll die Strahlung im Bereich der Fläche der Fettrinnen 16, 18 intensiviert werden, so kann es bevorzugt
sein, die Fettrinnen 16, 18 aus feuerbeständigem Glas herzustellen, das auch den Vorteil zeigt, leicht gereinigt
zu werden.

Die unteren Fettrinnen 16 sind breiter als die jeweilige
Lücke (Abstand) zweier oberer benachbarter Fettrinnen 18,
so daß einerseits der Rauch aus der Glut einen günstigen
Durchlaß findet und das aufliegende Grillgut breitflächig
bestreicht, andererseits aber die Fläche zwischen der Glutfläche und dem Grillgut in der waagerechten Ebene voll
ausgefüllt ist, um ein unerwünschtes Abtropfen von Fett
in die Glut zu verhindern.

Auf einem rechteckigen Rahmen 21 (Tragrahmen), auf dem
etwa im Querschnitt Z-förmig ausgebildete und schrägfächerartig parallel zueinander verlaufende Fettrinnen 22 stehen, deren untere V-förmig abgewinkelte Endstücke z.B.
durch Schweißen an dem Rahmen 21 befestigt sind.

Diese Fettrinnen 22 sind unter einem Winkel von etwa 35-50° derart geneigt und im Querschnitt breit ausgebildet, daß die obere dachartig ausgebildete Kante 22a, die wie Stäbe das Grillgut trägt, über der benachbarten Fettrinne 22 derartig liegt, daß kein Fett des Grillgutes nach unten in die Glutfläche abtropfen kann. Durch eine derartige Ausbildung und Anordnung wird erreicht, daß immer das Fett in eine der Fettrinnen 22 fließt. Durch eine derart überlappende und in der waagerechten Ebene versetzt angeordnete Parallellagerung mehrerer Fettrinnen 22 wird zusätzlich der aus der Glutfläche aufsteigende Rauch durch schräge Schlitze 23 (kaminartig) geführt, die zwischen den Fettrinnen 22 gebildet sind.

Eine derartige Rauchführung läßt einerseits vorteilhaft das Grillgut bestreichen und andererseits großflächig die Fettrinnen 22 derart erwärmen, daß deren Wärmestrahlen zusätzlich das Grillgut erreichen.

In dem Rahmen 21, der einseitig eine Fettsammelrinne 24 als Querrinne hält, in welche das Fett aus den einzelnen, gegenüber der Waagerechten geneigten Fettrinnen 22 abfließt, sind an dem Rahmen 21 Handgriffe 25 befestigt, so daß der Grillrost an verschiedenen Unterbauten aufgelegt werden kann.

Die auf dem Rahmen 21 befestigten Fettrinnen 22 sind zur Fettsammelrinne 24 hin geneigt angeordnet. Dabei ist die der Fettsammelrinne 24 gegenüberliegende, den Rahmen 21 bildende, winkelförmige Leiste 26 mit ihrem senkrechten Schenkel 26a, auf welchem die Fettrinnen 22 befestigt sind, höher ausgebildet.

- 9 -

Ein derartiges Grillgerät ist einfach im Aufbau. Das Grillgut wird schonend gegrillt und das Entstehen gesundheitsschädlicher Rauchablagerungen wird vermieden.

**Patentanwalt**

# Dipl.-Ing. Th. Hoefer

— 10 —

4800 Bielefeld 1, den
Kreuzstraße 32
Telefon (05 21) 17 10 72 - Telex 9-32 449

Bankkonten: Commerzbank AG, Bielefeld 6 851 471 (BLZ 480 400 35)
Sparkasse Bielefeld 72 001 563 (BLZ 480 501 61)
Postscheckkonto: Amt Hannover 689 28-304 .

Zugelassener Vertreter beim Europäischen Patentamt
Prof. Representative before the European Patent Office
Mandataire agréé près l'Office européen des brevets

Herr Wilhelm Henke, Schanze Weg 4-10, 4990 Alswede 4

## Grillgerät

### Patentansprüche

1. Grillgerät mit das zu grillende Gut stützenden, parallel verlaufenden Roststäben, gekennzeichnet durch in waagerechter Ebene sich überlappende , gegeneinander versetzt angeordnete Fettrinnen (16, 18, 22) als Roststäbe, die breiter sind als der lichte Abstand der die Roststäbe bildenden Fettrinnen (Fettrinnenkanten) voneinander.

2.  Grillgerät nach Anspruch 1, gekennzeichnet durch in der Höhe gegeneinander versetzte Fettrinnen (16, 18) als Roststäbe, wobei die tiefer liegenden, auf Lücke gegenüber den oberen, das Gut tragenden Fettrinnen (18) liegenden Fettrinnen (16) breiter sind als der lichte Abstand der oberen Fettrinnen (18).

3.  Grillgerät nach Anspruch 1, dadurch gekennzeichnet, daß die Fettrinnen (22) schrägfächerartig parallel zueinander geneigt verlaufend angeordnet sind und die Gesamtbreite jeder Fettrinne (22) größer ist als der Abstand ihrer oberen, Auflagen bildenden Kanten (22a) voneinander.

4.  Grillgerät nach den Ansprüchen 1 bis 3, dadurch gekennzeichnet, daß die Fettrinnen (16, 18, 22) gegenüber der waagerechten Ebene geneigt liegen und unterhalb ihrer tieferen Rinnenöffnung in eine quer dazu verlaufende Fett-Sammelrinne (20, 24) münden.

5.  Grillgerät nach den Ansprüchen 1 bis 4, dadurch gekennzeichnet, daß die Fett-Sammelrinne (20, 24) in einem Tragrahmen (11, 21) herausnehmbar gehalten ist.

6.  Grillgerät nach den Ansprüchen 1 bis 5, dadurch gekennzeichnet, daß die Fettrinnen (16, 18) im Querschnitt U-, V-, W-, Z-förmig ausgebildet sind.

7.  Grillgerät nach den Ansprüchen 1 bis 6, dadurch gekennzeichnet, daß die oberen Auflagekanten (19, 22a) der Fettrinnen (16, 18, 22) umgekehrt V-förmig ausgebildet sind.

8.  Grillgerät nach den Ansprüchen 1 bis 7, dadurch gekennzeichnet, daß die oberen Fettrinnen (18) auf den oberen Winkelleisten (17) und auf den Abstandshaltern (15) lösbar lagern.

9.  Grillgerät nach den Ansprüchen 1 bis 8, dadurch gekennzeichnet, daß die unteren Fettrinnen (16) auf den winkelförmigen Querleisten (14) befestigt sind und mit dem Tragrahmen (11) eine Einheit bilden.

10. Grillgerät nach den Ansprüchen 1 bis 9, dadurch gekennzeichnet, daß die Fettrinnen (16, 18, 22) aus feuerfestem Glas gebildet sind.

0099551

1/2

Fig. 1

Fig. 2

Fig. 3

0099551

Fig. 4

Fig. 5

Fig. 6